# EUROPEAN PATENT SPECIFICATION

(11) **EP 3 095 538 B1**
(45) Date of publication and mention of the grant of the patent: **11.12.2019**
(21) Application number: 15168336.4
(22) Date of filing: 20.05.2015
(51) Int. Cl.: B33Y 80/00, B23Q 3/06, B22F 3/105, B23Q 3/18, B23Q 7/14, B29C 67/00, B33Y 10/00, B29C 64/153, A61C 13/00, B33Y 40/00

(54) **PROCESS FOR RE-MACHINING A SEMIFINISHED PRODUCT OBTAINED BY SELECTIVE LASER MELTING, EQUIPMENT FOR GRIPPING SAID SEMIFINISHED PRODUCT**
VERFAHREN FÜR BEARBEITUNG EINES SELEKTIVES LASERSCHMELZEN HERGESTELLTEN HALBFERTIGEN PRODUKTS, EINRICHTUNG ZUM GREIFEN DES BESAGTEN HALBFERTIGEN PRODUKTS
PROCÉDÉ POUR L'USINAGE D'UN PRODUIT SEMI-FINI OBTENU PAR FUSION LASER SÉLECTIVE, ÉQUIPEMENT POUR SAISIR LEDIT PRODUIT SEMI-FINI

(43) Date of publication of application: 23.11.2016
(73) Proprietor: Sisma S.p.A., 36013 Piovene Rocchette (Vicenza) (IT)
(72) Inventor: Gamba, Guido Giuseppe, 36060 Romano d'Ezzelino (Vicenza) (IT); Riva, Fausto, 36010 Zanè (Vicenza) (IT)
(74) Representative: Lissandrini, Marco

(56) References cited:
- EP-A1- 2 022 622
- EP-A2- 2 543 498
- DE-A1- 10 121 436
- DE-A1- 19 958 937
- DE-A1-102012 108 217
- DE-U1- 20 305 553
- US-A- 5 234 295
- US-A- 5 647 704
- US-A1- 2012 113 439
- US-A1- 2013 244 040
- US-A1- 2015 093 720

## Description

This invention relates to a process for re-machining a semifinished product obtained by selective laser melting.

This invention also relates to gripping equipment and a semifinished product obtained by selective laser melting.

The selective laser melting process (SLM) is an additive production technology since it is based on the layered addition of metallic powder, by means of laser melting.

This technology is based on selective micro-melting by a beam laser of a layer of metallic powder with controlled grain size in such a way as to make thin layers of superposed molten/solidified metal. Proceeding layer by layer it is possible to obtain three-dimensional objects of any shape and/or geometry.

Selective laser melting is used in many industrial sectors for making objects, even with complex shapes, in a rapid way, more economical than normal metal fusion processes. Selective laser melting is applied in particular in the sector of jewellery, watch making and dental prostheses, as well as in the technical field of prototype production.

In some of the reference technical sectors, selective laser melting does not produce a finished three-dimensional object but a semifinished product which require further processing in a removal machine, for example a cutter, to obtain predetermined surface characteristics and/or dimensional accuracy.

The re-machining of the semifinished product obtained by selective laser melting is at the moment not very reliable and rather complex, therefore requiring quite long preparation times and often unsatisfactory results.

With regard to the background art, several documents are known.

Document US 5234295 discloses an adjustable support fixture and method for using same with a cutting assembly for milling or grinding a flat surface on a workpiece, the fixture including a suspended platen on which the workpiece is mounted, removable apparatus for establishing the cutting plane, devices for positioning the flat surface of the workpiece against the plane-establishing apparatus, and a mechanism for retaining the workpiece in this position as the plane-establishing apparatus is removed and the cutting operation is performed.

Document DE 19958937 relates to a precision fixing process that fixes a component such as a pallet to a machine table by means of at least one clamping bolt fitted in a clamping point. Before the bolt is inserted in the component, it is pre-centered in the clamping point by pre-centering elements and lifting modules. The bolt is then inserted by lowering the modules.

Document EP 2022622 shows a method of forming a component from solid freeform fabrication comprising the step of building an integral support around the component during manufacture thereof. The stiffness the support provides to the component is selected to minimise deformation of the component either during the manufacture of the component or during a subsequent heat treatment process.

Document EP 2543498 discloses a method that involves circumferentially engaging holding portion outer contour of holding portion of three-dimensional component with holding space internal contour of wall of holding spaces of holding frame via opening such that annular gap is formed between contours. The non-solidified particulate matter in outside of gap is removed from completely formed component so that non-solidified particulate matter in gap is in contact with contours and component over particulate material remaining in gap is supported on frame.

In this context, the technical purpose which forms the basis of this invention is to provide process for re-machining a semifinished product obtained by selective laser melting, gripping equipment and a semifinished product obtained by selective laser melting which overcome the above-mentioned drawbacks of the prior art.

With reference to this description and to the respective claims, the term "semifinished product" means the selective laser melting product and may comprise a single three-dimensional object designed to form the finished product or two or more three-dimensional objects each designed to form a predetermined finished product. The semifinished product in its entirety is equipped with supporting arms designed to be fixed to gripping equipment. If the semifinished product comprises a plurality of three-dimensional objects, there are connecting or interlocking arms to rigidly join the various three-dimensional objects and to form a "network" of three-dimensional objects using in an optimum manner the entire available space.

More specifically, the aim of this invention is to provide a process for re-machining a semifinished product obtained by selective laser melting, gripping equipment and a semifinished product obtained by selective laser melting which is able to re-machine the semifinished product in a rapid and reliable manner, such as to allow high levels of precision and/or accuracy to be reached in the successive machining.

A further aim of this invention is to provide a process for re-machining a semifinished product obtained by selective laser melting, gripping equipment and a semifinished product obtained by selective laser melting which are able to achieve clear improvements in the surface quality, precision and dimensional accuracy.

The technical purpose indicated and the aims specified are substantially achieved by a process for re-machining a semifinished product obtained by selective laser melting, gripping equipment and a semifinished product obtained by selective laser melting comprising the technical features described in one or more of the appended claims. The dependent claims correspond to different embodiments of the invention.

More specifically, according to a first aspect, this invention relates to a process for re-machining a semifinished product obtained by selective laser melting comprising the steps of:
- preparing in the course of the selective laser melting a plurality of arms for supporting the semifinished product designed to be fixed to gripping equipment using connecting means preferably threaded, each supporting arm being provided with a first portion of coupling means shaped to match the gripping equipment configured to guarantee centring of the semifinished product,
- making the gripping equipment equipped with a plurality of second portions of the coupling means shaped to match and a plurality of fixing holes designed to receive the fixing means,
- re-machining the semifinished product with the removal machine centring each supporting arm with respect to the gripping equipment using the respective shaped coupling means and fixing each supporting arm to the gripping equipment using the connecting means.

In this way it is possible to guarantee optimum results in terms of precision and reliability.

Preferably, the step of making the gripping equipment is performed directly in a removal machine.

Starting from gripping equipment made directly in the removal machine it is possible to guarantee a perfect centring of the gripping equipment on the machine which, in effect, builds the griping equipment.

Preferably, the step of making the gripping equipment comprises the step of making in the gripping equipment a reference for fixing the semifinished product. The step of re-machining the semifinished product comprises the step of positioning it relative to the reference to avoid positioning errors.

Preferably, the reference is obtained by shaping a lateral wall of the gripping equipment about a fixing hole. Preferably, a polygonal shape is obtained. In this way the reference is directly associated with a fixing hole making the positioning of the semifinished product easier and faster, avoiding in errors.

Each supporting arm is set up in such a way as to end with a fixing socket designed to be fixed to the gripping equipment. Each fixing socket defines a first portion of conical coupling means defining the shaped coupling means. Each fixing hole of the gripping equipment is made in such a way as to define a second portion of conical coupling means, forming shaped coupling means.

In this way, the perfection of the centring between semifinished product and gripping equipment is guaranteed thanks to the presence of the conical coupling means acting in conjunction between the fixing holes and the fixing sockets.

Preferably, preparing the conical coupling means comprises making a conical seat around each fixing socket and a conical frame positioned around each fixing hole. This configuration of the conical coupling means is optimal for guaranteeing the correct centring of each fixing socket with respect to the relative fixing hole.

Preferably, the step of making the gripping equipment comprises the step of making an annular groove at the base of each conical frame so as to avoid interference and/or jamming of the fixing socket relative to the gripping equipment.

In accordance with a possible further aspect, this invention further relates to gripping equipment preferably made directly in a removal machine and comprising a plurality of fixing holes designed for receiving the fixing means. The gripping equipment comprises a plurality of second portions of the shaped coupling means. Each fixing hole is provided with a second portion of the conical coupling means.

Preferably, the second portion of the conical coupling means comprises a conical frame positioned around each fixing hole configured for coupling with a conical seat made around each fixing socket of the semifinished product. The conical seat defines the first portion of the conical coupling means.

Preferably, there is an annular groove positioned at the base of each conical frame.

Preferably, there is a reference for fixing the semifinished product, for example comprising a polygonal shaping of a lateral wall of the gripping equipment. The polygonal shaping is made about a fixing hole of the gripping equipment.

Preferably, the griping equipment comprises a body defining a closed perimeter or an open perimeter. The fixing holes are positioned along the perimeter.

Preferably, there is a supporting bridge which crosses the closed perimeter. The supporting bridge is provided with a plurality of further fixing holes each comprising a second portion of the conical coupling means. In this way, the gripping equipment may be used for small-sized semifinished products.

Preferably, the gripping equipment comprises a plurality of seats alternated with the fixing holes and having transversal cross sections shaped to match the transversal cross section of the supporting arms. The seats define the second portions of the shaped coupling means. The connecting means comprise a fixing element designed to be positioned for closing the seats.

In accordance with yet another aspect, this invention relates to a semifinished product obtained by selective laser melting comprising a plurality of supporting arms. Each supporting arms is provided with a first portion of shaped coupling means designed to operate in conjunction with a second portion of shaped coupling means made in the gripping equipment to centre each supporting arm relative to the gripping equipment.

Each supporting arm ends with a fixing socket designed to be fixed to the gripping equipment by connecting means, preferably threaded. The fixing socket is equipped with a first portion of conical coupling means defining the shaped coupling means. The first portion of conical coupling means is designed to act in conjunction with the second portion of conical coupling means made at a respective fixing hole of the gripping equipment to centre each fixing socket with respect to the relative fixing hole using the respective conical coupling.

Preferably, the first portion comprises a conical seat made around each fixing socket and configured for coupling with a conical frame positioned around each fixing hole of the gripping equipment defining the second portion of the conical coupling means.

Further characteristics and advantages of this invention are more apparent in the description below, with reference to a preferred, non-limiting, embodiment of a process for re-machining a semifinished product obtained by selective laser melting, gripping equipment and a semifinished product obtained by selective laser melting.

The description is set out below with reference to the accompanying drawings which are provided solely for purposes of illustration without restricting the scope of the invention and in which:
- Figure 1 is a schematic perspective view of a first embodiment of gripping equipment according to this invention;
- Figure 2 is a schematic front view of the gripping equipment of Figure 1;
- Figure 3 is a diametral cross section view of the gripping equipment of Figure 2;
- Figure 4 shows an enlarged detail of Figure 3;
- Figure 5 shows an enlarged detail of a possible alternative embodiment of the gripping equipment of Figure 3;
- Figure 6 is a schematic front view of a second embodiment of gripping equipment according to this invention;
- Figure 7 is a schematic perspective view of a semifinished product obtained by selective laser melting according to this invention;
- Figure 7a is a schematic view in cross section of a detail of the semifinished product of Figure 7;
- Figure 8 is a schematic perspective view of a set comprising gripping equipment and a semifinished product obtained by selective laser melting according to this invention;
- Figure 9 is a schematic front view of a third embodiment of gripping equipment according to this invention.

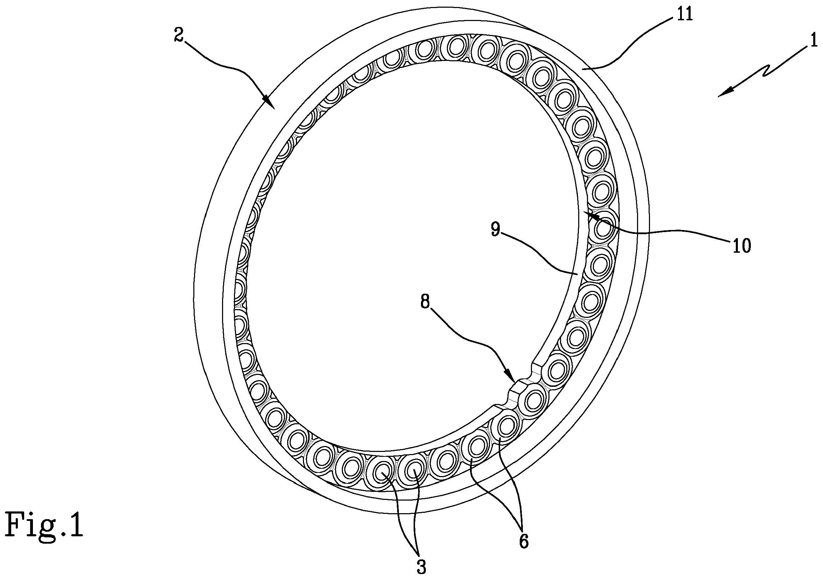

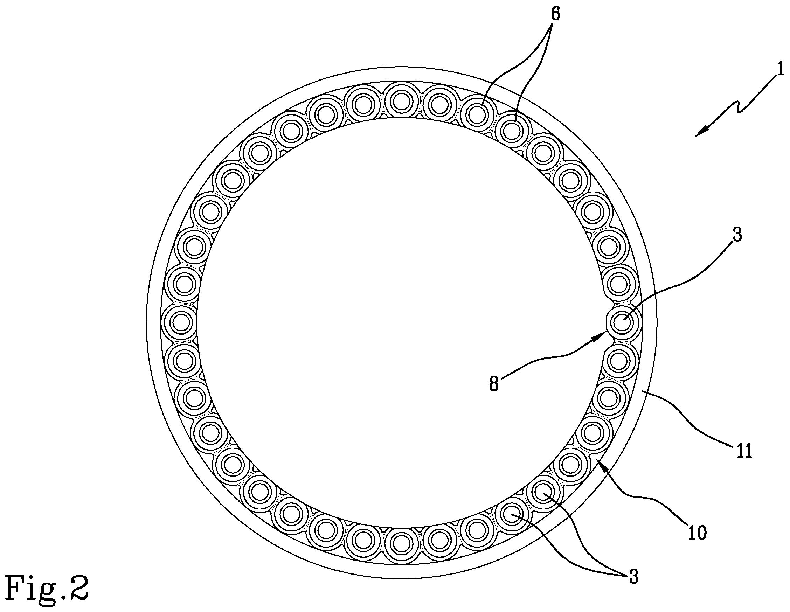

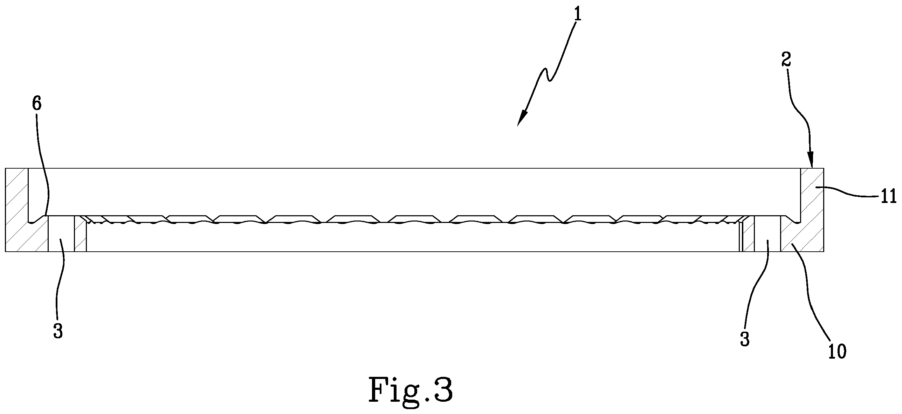

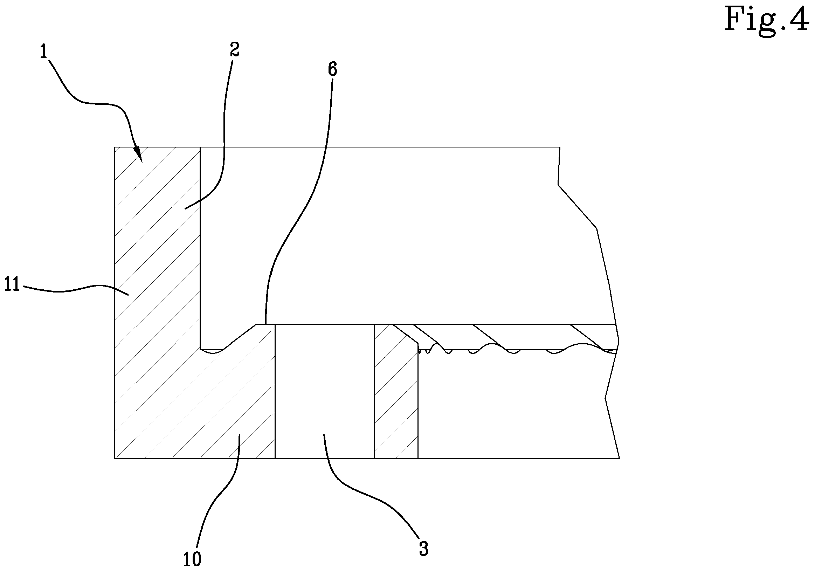

With reference to Figures 1 to 4, the numeral 1 denotes in its entirety gripping equipment for a process for re-machining a semifinished product obtained by selective laser melting.

The gripping equipment 1 is preferably made directly in a removal machine, in particular a cutter, not illustrated, by machining a solid metal disc previously fixed in the machine. In other words, the machine itself builds the gripping equipment 1 guaranteeing the perfect centring of the semifinished product.

With reference to Figures 1 to 4, the gripping equipment 1 has a body 2 defining a closed perimeter. More specifically, the body 2 has an axially-symmetrical annular shape, preferably circular.

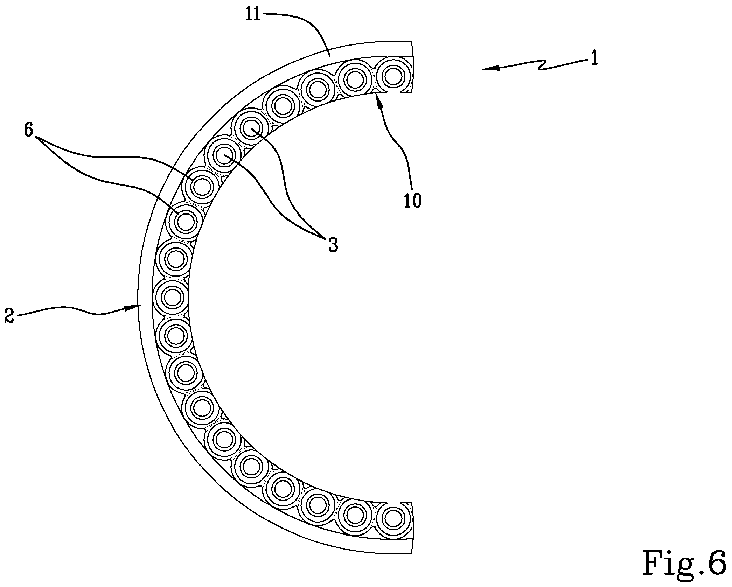

With reference to Figure 6, the gripping equipment 1 has a body 2 defining an open perimeter, for example shaped in the form of a "C" or in the form of a half-circumference.

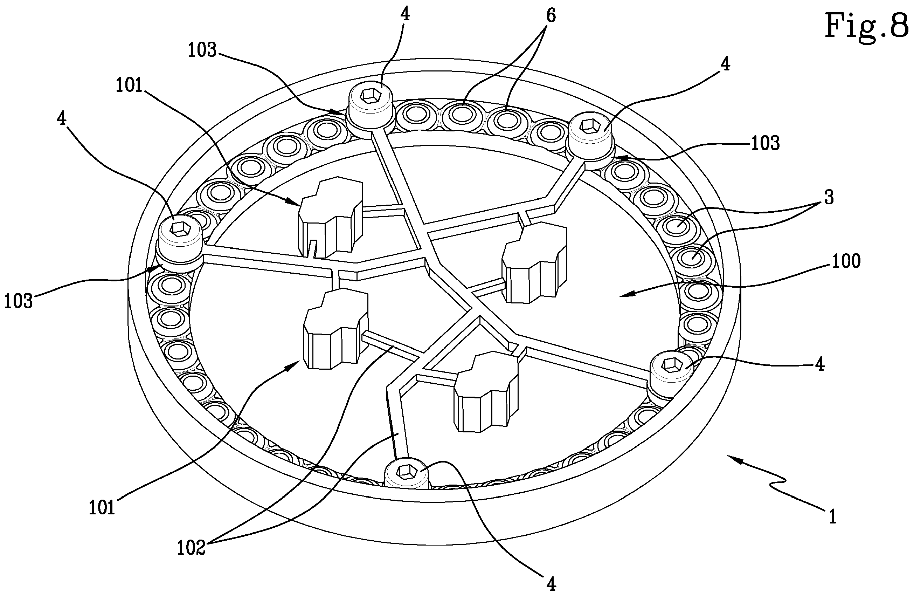

The gripping equipment 1 comprising a plurality of fixing holes 3 designed to receive fixing means, preferably of the threaded type. More specifically, Figure 8 illustrates screws 4 defining an example of the fixing means.

With reference to a body 2 forming a closed perimeter, the fixing holes are positioned preferably along the closed perimeter.

With reference to a body 2 forming an open perimeter, the fixing holes are positioned preferably along the open perimeter.

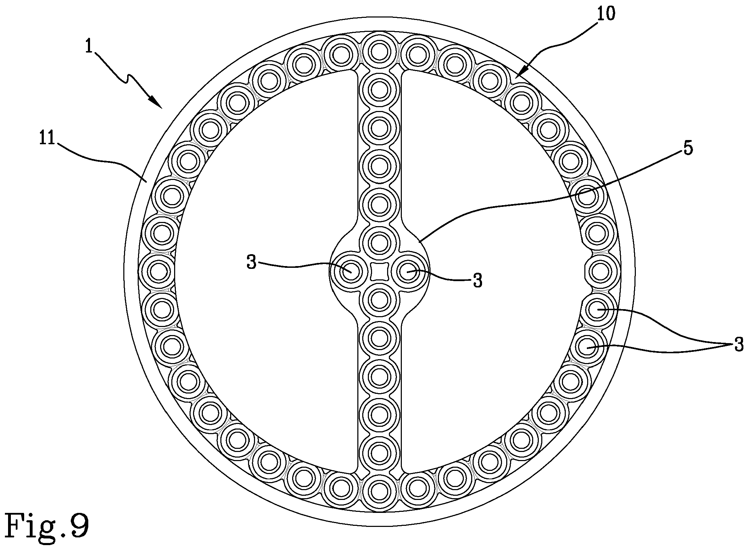

According to a possible embodiment, in particular in the case wherein the body 2 defines a closed perimeter, the equipment 1 may comprise a supporting bridge 5 which crosses the closed perimeter (Figure 9). The supporting bridge 5 is also provided with a plurality of further fixing holes 3. The supporting bridge 5 is useful in the case of re-machining small-sized semifinished products.

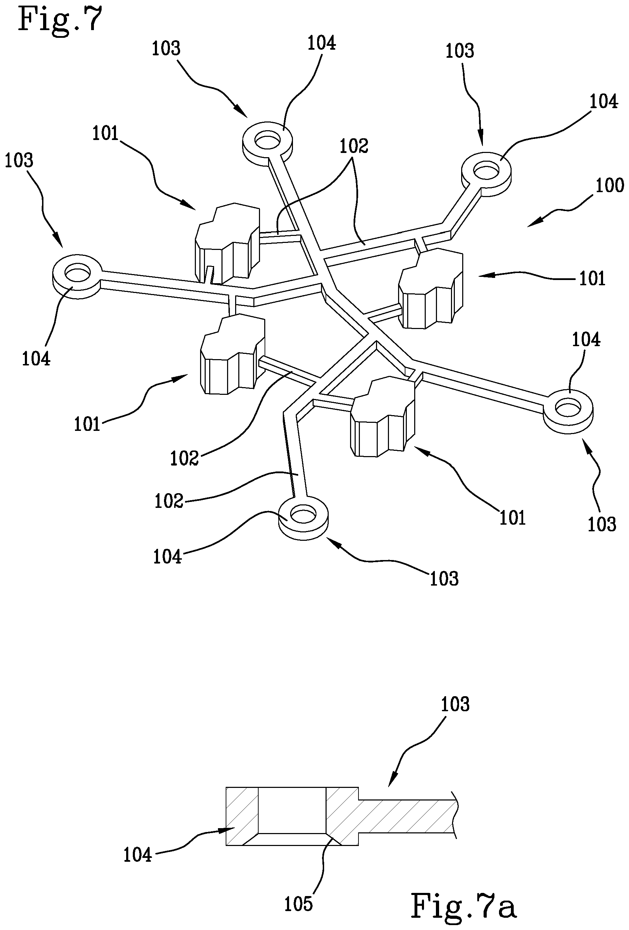

Figures 7 and 8 illustrate an example of semifinished product 100. The semifinished product comprises at least one three-dimensional object 101, in particular a plurality of three-dimensional objects 101 each designed to make a finished product. Each three-dimensional product 101 may be different from the others in terms of shape and/or dimensions. The shape, the dimensions and the type of finished product may vary in particular according to the sector of use. In other words, the semifinished product 100 corresponds to the selective laser melting product and may comprise a single three-dimensional object designed to form the finished product or two or more three-dimensional objects 101 each designed to form a predetermined finished product.

In the dental sector, the three-dimensional objects can be, for example, dental prostheses. In the jewellery sector, the three-dimensional objects can be any component of jewels or the like. In the watchmaking sector, the three-dimensional objects can be any component of the operational mechanism.

The semifinished product 100, in particular when comprising a plurality of three-dimensional objects 101, has a plurality of connecting or interlocking arms 102 positioned between the three-dimensional objects 101 to create a reticular structure. The shape and cross section of the interlocking arms are defined in particular on the basis of the strength characteristics necessary during the machining with the removal machine, for example the cross section of interlocking arms is trapezoidal. More specifically, the cross section of the interlocking arms is selected between those which allow rigidity and stability to be obtained with less space used and, therefore, a saving in material.

The connecting or interlocking arms allow the various three-dimensional objects 101 to be joined rigidly and to form a "network" of three-dimensional objects using in an optimum manner the entire available space.

The semifinished product 100 comprises a plurality of supporting arms 103 ending with a fixing socket 104 designed to be fixed to gripping equipment 1 using connecting means. In other words, each fixing socket 104 is designed to be positioned coaxially with a respective fixing hole 3 in such a way to receive the fixing means, in particular a screw 4.

The connecting or interlocking arms 102 and/or the supporting arms 103 can be made hollow with one or more openings to allow the discharge of the powder inside. The shape and cross section of the connecting arms are defined in particular on the basis of the strength characteristics necessary during the machining with the removal machine, for example the cross section of connecting arms is trapezoidal. More specifically, the cross section of the connecting arms is selected between those which allow rigidity and stability to be obtained with less space used and, therefore, a saving in material.

Each fixing socket 104 and each fixing hole 3 are shaped in such a way as to form together shaped coupling means, in particular conical coupling means configured for centring each fixing socket 104 on the gripping equipment 1 at a respective fixing hole 3.

More specifically, each fixing socket 104 is provided with a first portion of the conical coupling means and each fixing hole 3 is provided with a second portion of the conical coupling means.

The first portion of conical coupling means is designed to act in conjunction with the second portion of conical coupling means to centre each fixing socket 104 with respect to the relative fixing hole 3 using the respective conical coupling.

Preferably, the first portion of the conical coupling means comprises a conical seat 105 made around each fixing socket 104 and the second portion of the conical coupling means comprises a conical frame 6 positioned around each fixing hole 3.

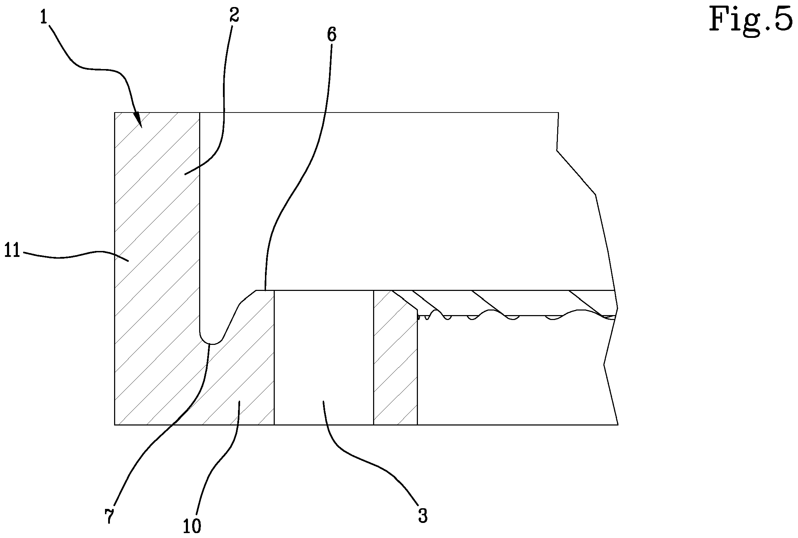

The conical frame 6 is configured for coupling with the conical seat 105 centring each fixing socket 104 with respect to the relative fixing hole 3. Preferably, the gripping equipment 1 comprises an annular groove 7 (Figure 5) positioned at the base of each conical frame 6 to prevent interference between the conical frame 6 and the conical seat 105.

According to a possible embodiment, the gripping equipment 1 comprises a reference 8 for fixing the semifinished product 100. Preferably, the reference 8 is made by shaping a lateral wall 9 of the gripping equipment 1 about a fixing hole 3. Preferably, the reference 8 is made by a polygonal shaping about a fixing hole 3.

In accordance with the embodiment illustrated in Figures 1 to 5 or 9, the gripping equipment 1 comprises an annular plate 10 which defines the closed perimeter and on which the fixing holes 3 are made. Also in the case of the embodiment of Figure 6, the gripping equipment 1 comprises an annular plate 10 which defines the open perimeter on which the fixing holes 3 are made. The gripping equipment 1 also comprises an outer wall 11 which delimits the plate 10 and extends perpendicularly to it for a stretch having a dimension greater than the thickness of the plate 10. Preferably, the reference 8 is made by shaping a lateral wall 9 inside the gripping equipment 1, positioned on the side opposite the outer wall 11 relative to the plate 10.

The gripping equipment 1 and the semifinished product 100 made in this way allow a process for re-machining the semifinished product obtained by selective laser melting to be performed in a reliable and precise fashion.

The re-machining process comprises the step of preparing in the course of the selective laser melting the plurality of supporting arms 103 of the semifinished product 100, each ending with the fixing socket 104, as described above.

The re-machining process preferably comprises the step of making the gripping equipment 1 directly in the removal machine, generating also the plurality of fixing holes 3 as described previously.

Lastly, the re-machining process comprises the step of re-machining the semifinished product 100 with the removal machine centring each fixing socket 104 with respect to the relative fixing hole 3 using the respective conical coupling means and fixing each supporting arm 103 to the gripping equipment 1 at the respective fixing hole 3 by means of connecting means.

The re-machining process according to this invention may comprises the step of making in the gripping equipment 1 a reference 8 for fixing the semifinished product 100. In this case, the step of re-machining the semifinished product 100 comprises the step of positioning it relative to the reference 8.

Preferably, the step of making in the gripping equipment 1 a reference 8 comprises shaping a lateral wall 9 of the gripping equipment 1 about a fixing hole 3, preferably generating a polygonal shape.

Preferably, the step of making the gripping equipment 1 comprises the step of making an annular groove 7 at the base of each conical frame 6.

In general, the re-machining process according to this invention comprises preparing in the course of the selective laser melting a plurality of supporting arms 103 of the semifinished product 100 designed to be fixed to gripping equipment 1 by connecting means 4 preferably threaded. More specifically, in each supporting arm 103 a first portion of the shaped coupling means is made configured to guarantee centring of the semifinished product.

The gripping equipment is made equipped with the plurality of second portions of the shaped coupling means and the plurality of fixing holes 3. Lastly, the semifinished product 100 is re-machined with the removal machine centring each supporting arm 103 with respect to the gripping equipment 1 using the respective shaped coupling means and fixing each supporting arm 103 to the gripping equipment 1 using the connecting means. The step of making the gripping equipment is performed directly in a removal machine.

In general, the re-machining process according to this invention comprises preparing in the course of the selective laser melting a plurality of supporting arms 103 of the semifinished product 100 designed to be fixed to gripping equipment 1 by connecting means 4 preferably threaded. More specifically, in each supporting arm 103 a first portion of the shaped coupling means is made configured to guarantee centring of the semifinished product.

The gripping equipment is made equipped with the plurality of second portions of the shaped coupling means and the plurality of fixing holes 3. Lastly, the semifinished product 100 is re-machined with the removal machine centring each supporting arm 103 with respect to the gripping equipment 1 using the respective shaped coupling means and fixing each supporting arm 103 to the gripping equipment 1 using the connecting means. The step of making the gripping equipment is performed directly in a removal machine.

## Claims

1. A process for re-machining a semifinished product (100) obtained by selective laser melting comprising the steps of:
- preparing in the course of the selective laser melting a plurality of arms (103) for supporting the semifinished product (100) designed to be fixed to gripping equipment (1) using connecting means (4) preferably threaded, each supporting arm (103) being provided with a first portion of conical coupling means,
- making the gripping equipment (1) equipped with a plurality of second portions of the conical coupling means and a plurality of fixing holes (3) designed to receive the fixing means,
- re-machining the semifinished product (100) with the removal machine centring each supporting arm (103) with respect to the gripping equipment (1) using the respective conical coupling means,
- fixing each supporting arm (103) to the gripping equipment (1) using the connecting means,
wherein each supporting arm (103) of the semifinished product (100) is set up in such a way as to end with a fixing socket (104) designed to be fixed to the gripping equipment (1) by the connecting means (4), each fixing socket (104) defining the first portion of said conical coupling means and wherein each fixing hole (3) of the gripping equipment (1) is made in such a way as to define the second portion of the conical coupling means.

2. The re-machining process according to claim 1, wherein the step of making the gripping equipment (1) is performed directly in a removal machine.

3. The re-machining process according to claim 1, wherein each first portion of the conical coupling means comprises a conical seat (105) made around each fixing socket (104) and wherein each second portion of the conical coupling means comprises a conical frame (6) positioned around each fixing hole (3).

4. The re-machining process according to claim 3, wherein the step of making the gripping equipment (1) comprises the step of making an annular groove (7) at the base of each conical frame (6).

5. The re-machining process according to any one of the preceding claims, wherein the step of making the gripping equipment (1) comprises the step of making in the gripping equipment (1) a reference (8) for fixing the semifinished product (100) and wherein the step of re-machining the semifinished product comprises positioning it relative to the reference (8).

6. The re-machining process according to claim 5, wherein the step of making in the gripping equipment (1) a reference (8) comprises shaping a lateral wall (9) of the gripping equipment (1) about a fixing hole (3), preferably generating a polygonal shape.

7. Gripping equipment (1) for a process for re-machining a semifinished product (100) obtained by selective laser melting, wherein the semifinished product (100) comprises a plurality of supporting arms (103), each supporting arm (103) being provided with a fixing socket (104) defining a first portion of conical coupling means shaped to match the gripping equipment (1) configured to guarantee centring of the semifinished product,
the gripping equipment (1) comprising a plurality of fixing holes (3) designed to receive connecting means (4), preferably threaded, wherein each fixing hole (3) is made in such a way as to define a second portion of said conical coupling means, each conical coupling being designed to centre a fixing socket (104) of a supporting arm (103) on the gripping equipment (1) at a respective fixing hole (3).

8. The gripping equipment (1) according to claim 7, made directly in a removal machine.

9. The gripping equipment (1) according to claim 7, wherein the second portion of the conical coupling means comprises a conical frame (6) positioned around each fixing hole (3) configured for coupling with a conical seat (105) made around each fixing socket (104) of the semifinished product (100), the conical seat (105) defining the first portion of the conical coupling means.

10. The gripping equipment (1) according to claim 9, comprising an annular groove (7) positioned at the base of each conical frame (6).

11. The gripping equipment (1) according to any one of claims 7 to 10, comprising a reference (8) for fixing the semifinished product (100).

12. The gripping equipment (1) according to claim 11, wherein the reference (8) comprises a polygonal shaping of a lateral wall (9) of the gripping equipment (1), the polygonal shaping being made about a fixing hole (3).

13. The gripping equipment (1) according to any one of claims 7 to 12, comprising a body (2) defining a closed perimeter, the fixing holes (3) being positioned along the closed perimeter.

14. The gripping equipment (1) according to claim 13, comprising a supporting bridge (5) which passes through the closed perimeter, the supporting bridge (5) being provided with a plurality of further fixing holes (3) and comprising a plurality of second portions of the conical coupling means.

15. The gripping equipment (1) according to any one of claims 7 to 14, comprising a body (2) defining an open perimeter, the fixing holes (3) being positioned along the open perimeter.

## Patentansprüche

1. Verfahren zum Nachbearbeiten eines durch selektives Laserschmelzen erhaltenen Halbzeugs (100), umfassend die Schritte:
- im Zuge des selektiven Laserschmelzens Vorbereiten einer Vielzahl an Armen (103) zum Tragen des Halbzeugs (100), das dazu ausgelegt ist, an einer Greifeinrichtung (1) unter Verwendung von Verbindungsmitteln (4), vorzugsweise mit Gewinde, befestigt zu werden, wobei jeder Tragarm (103) mit einem ersten Abschnitt von konischen Verbindungsmitteln versehen ist,
- Ausrüsten der Greifeinrichtung (1) mit einer Vielzahl an zweiten Abschnitten der konischen Kupplungsmittel und einer Vielzahl an Befestigungslöchern (3), die ausgelegt sind, um die Befestigungsmittel aufzunehmen,
- Nachbearbeiten des Halbzeugs (100) mit der Entfernungsmaschine, die jeden Tragarm (103) in Bezug auf die Greifeinrichtung (1) unter Verwendung der jeweiligen konischen Kupplungsmitteln zentriert,
- Befestigen jedes Tragarms (103) an der Greifeinrichtung (1) unter Verwendung der Verbindungsmittel,
wobei jeder Tragarm (103) des Halbzeugs (100) so eingerichtet ist, dass er mit einem Befestigungsanschlussstück (104) endet, das dazu ausgelegt ist, durch die Verbindungsmittel (4) an der Greifeinrichtung (1) befestigt zu werden, wobei jedes Befestigungsanschlussstück (104) den ersten Abschnitt der konischen Kupplungsmittel definiert und wobei jedes Befestigungsloch (3) der Greifeinrichtung (1) so ausgebildet ist, dass es den zweiten Abschnitt der konischen Kupplungsmittel definiert.

2. Nachbearbeitungsverfahren nach Anspruch 1, wobei der Schritt zum Herstellen der Greifeinrichtung (1) direkt in einer Entfernungsmaschine durchgeführt wird.

3. Nachbearbeitungsverfahren nach Anspruch 1, wobei jeder erste Abschnitt der konischen Kupplungsmittel einen konischen Sitz (105) umfasst, der um jedes Befestigungsanschlussstück (104) ausgebildet ist, und wobei jeder zweite Abschnitt der konischen Kupplungsmittel einen konischen Rahmen (6) umfasst, der um jedes Befestigungsloch (3) positioniert ist.

4. Nachbearbeitungsverfahren nach Anspruch 3, wobei der Schritt zum Herstellen der Greifeinrichtung (1) den Schritt zum Herstellen einer Ringnut (7) an der Basis jedes konischen Rahmens (6) umfasst.

5. Nachbearbeitungsverfahren nach einem der vorhergehenden Ansprüche, wobei der Schritt zum Herstellen der Greifeinrichtung (1) den Schritt zum Herstellen in der Greifeinrichtung (1) einer Referenz (8) zur Befestigung des Halbzeugs (100) umfasst und wobei der Schritt zum Nachbearbeiten des Halbzeugs dessen Positionieren relativ zur Referenz (8) umfasst.

6. Nachbearbeitungsverfahren nach Anspruch 5, wobei der Schritt zum Herstellen in der Greifeinrichtung (1) einer Referenz (8) das Formen einer Seitenwand (9) der Greifeinrichtung (1) um ein Befestigungsloch (3) umfasst, wobei vorzugsweise eine polygonale Form erzeugt wird.

7. Greifeinrichtung (1) für ein Verfahren zum Nachbearbeiten eines durch selektives Laserschmelzen erhaltenen Halbzeugs (100), wobei das Halbzeug (100) eine Vielzahl an Tragarmen (103) umfasst, wobei jeder Tragarm (103) mit einem Befestigungsanschlussstück (104) versehen ist, das einen ersten Abschnitt von konischen Kupplungsmitteln definiert, die so geformt sind, dass sie mit der Greifeinrichtung (1) übereinstimmen, die konfiguriert ist, um die Zentrierung des Halbzeugs zu gewährleisten,
wobei die Greifeinrichtung (1) eine Vielzahl an Befestigungslöchern (3) umfasst, die zur Aufnahme von Verbindungsmitteln (4), vorzugsweise mit Gewinde, ausgelegt sind, wobei jedes Befestigungsloch (3) so ausgebildet ist, dass es einen zweiten Abschnitt der konischen Kupplungsmittel definiert, wobei jede konische Kupplung so ausgelegt ist, dass sie ein Befestigungsanschlussstück (104) eines Tragarms (103) auf der Greifeinrichtung (1) an einem jeweiligen Befestigungsloch (3) zentriert.

8. Greifeinrichtung (1) nach Anspruch 7, direkt in einer Entfernungsmaschine hergestellt.

9. Greifeinrichtung (1) nach Anspruch 7, wobei der zweite Abschnitt der konischen Kupplungsmittel einen konischen Rahmen (6) umfasst, der um jedes Befestigungsloch (3) positioniert ist, das zum Koppeln mit einem konischen Sitz (105) konfiguriert ist, der um jedes Befestigungsanschlussstück (104) des Halbzeugs (100) hergestellt ist, wobei der konische Sitz (105) den ersten Abschnitt der konischen Kupplungsmittel definiert.

10. Greifeinrichtung (1) nach Anspruch 9, umfassend eine Ringnut (7), die an der Basis jedes konischen Rahmens (6) positioniert ist.

11. Greifeinrichtung (1) nach einem der Ansprüche 7 bis 10, umfassend eine Referenz (8) zur Befestigung des Halbzeugs (100).

12. Greifeinrichtung (1) nach Anspruch 11, wobei die Referenz (8) eine polygonale Formgebung einer Seitenwand (9) der Greifeinrichtung (1) umfasst, wobei die polygonale Formgebung um ein Befestigungsloch (3) gemacht wird.

13. Greifeinrichtung (1) nach einem der Ansprüche 7 bis 12, umfassend einen Körper (2), der einen geschlossenen Umfang definiert, wobei die Befestigungslöcher (3) entlang des geschlossenen Umfangs positioniert sind.

14. Greifeinrichtung (1) nach Anspruch 13, umfassend eine Tragbrücke (5), die durch den geschlossenen Umfang verläuft, wobei die Tragbrücke (5) mit einer Vielzahl an weiteren Befestigungslöchern (3) versehen ist und eine Vielzahl an zweiten Abschnitten der konischen Kupplungsmittel umfasst.

15. Greifeinrichtung (1) nach einem der Ansprüche 7 bis 14, umfassend einen Körper (2), der einen offenen Umfang definiert, wobei die Befestigungslöcher (3) entlang des offenen Umfangs positioniert sind.

## Revendications

1. Procédé pour le ré-usinage d'un produit semi-fini (100) obtenu par fusion laser sélective comprenant les étapes de :
- préparer, dans le cadre de la fusion laser sélective, une pluralité de bras (103) pour supporter le produit semi-fini (100) conçu pour être fixé à l'équipement de préhension (1) en utilisant des moyens de raccordement (4) de préférence filetés, chaque bras de support (103) étant pourvu d'une première partie de moyens d'accouplement coniques,
- préparer l'équipement de préhension (1) équipé d'une pluralité de secondes parties de moyens d'accouplement coniques et une pluralité d'orifices de fixation (3) conçus pour recevoir les moyens de fixation,
- ré-usiner le produit semi-fini (100) avec la machine à enlèvement en centrant chaque bras de support (103) par rapport à l'équipement de préhension (1) en utilisant les moyens d'accouplement coniques respectifs,
- fixer chaque bras de support (103) à l'équipement de préhension (1) en utilisant les moyens de raccordement, dans lequel chaque bras de support (103) du produit semi-fini (100) est réglé de manière à se terminer par un support de fixation (104) conçu pour être fixé à l'équipement de préhension (1) par les moyens de raccordement (4), chaque support de fixation (104) définissant la première partie desdits moyens d'accouplement coniques et dans lequel chaque orifice de fixation (3) de l'équipement de préhension (1) est réalisé de manière à définir la seconde partie des moyens d'accouplement coniques.

2. Procédé de ré-usinage selon la revendication 1, dans lequel l'étape consistant à fabriquer l'équipement de préhension (1) est exécutée directement dans la machine d'enlèvement.

3. Procédé de ré-usinage selon la revendication 1, dans lequel chaque première partie des moyens d'accouplement coniques comprend un siège conique (105) réalisé autour de chaque support de fixation (104) et dans lequel chaque seconde partie des moyens d'accouplement coniques comprend un châssis conique (6) positionné autour de chaque orifice de fixation (3).

4. Procédé de ré-usinage selon la revendication 3, dans lequel l'étape consistant à fabriquer l'équipement de préhension (1) comprend l'étape de réalisation d'une rainure annulaire (7) en correspondance de la base de chaque châssis conique (6).

5. Procédé de ré-usinage selon l'une quelconque des revendications précédentes, dans lequel l'étape consistant à fabriquer l'équipement de préhension (1) comprend l'étape consistant à réaliser dans l'équipement de préhension (1) une référence (8) pour fixer le produit semi-fini (100) et dans lequel l'étape consistant à ré-usiner le produit semi-fini comprend son positionnement par rapport à la référence (8) relative.

6. Procédé de ré-usinage selon la revendication 5, dans lequel l'étape consistant à réaliser dans l'équipement de préhension (1) une référence (8) comprend le façonnage d'une cloison latérale (9) de l'équipement de préhension (1) autour d'un orifice de fixation (3), de préférence en générant une forme polygonale.

7. Équipement de préhension (1) pour un procédé pour le ré-usinage d'un produit semi-fini (100) obtenu par fusion laser sélective, dans lequel le produit semi-fini (100) comprend une pluralité de bras de support (103), chaque bras de support (103) étant pourvu d'un support de fixation (104) définissant une première partie de moyens d'accouplement coniques façonnés pour correspondre à l'équipement de préhension (1) configuré pour garantir le centrage du produit semi-fini, l'équipement de préhension (1) comprenant une pluralité d'orifices de fixation (3) conçus pour recevoir des moyens de raccordement (4), de préférence filetés, dans lequel chaque orifice de fixation (3) est réalisé de manière à définir une seconde partie desdits moyens d'accouplement coniques, chaque accouplement conique étant conçu pour centrer un support de fixation (104) d'un bras de support (103) sur l'équipement de préhension (1) en correspondance d'un orifice de fixation (3) respectif.

8. Équipement de préhension (1) selon la revendication 7, fabriqué directement dans une machine d'enlèvement.

9. Équipement de préhension (1) selon la revendication 7, dans lequel la seconde partie conique des moyens d'accouplement coniques comprend un châssis conique (6) positionné autour de chaque orifice de fixation (3) configuré pour s'accoupler avec un siège conique (105) réalisé autour de chaque support de fixation (104) du produit semi-fini (100), le siège conique (105) définissant la première partie des moyens d'accouplement coniques.

10. Équipement de préhension (1) selon la revendication 9, comprenant une rainure annulaire (7) positionnée en correspondance de la base de chaque châssis conique (6) .

11. Équipement de préhension (1) selon l'une quelconque des revendications de 7 à 10, comprenant une référence (8) servant à fixer le produit semi-fini (100).

12. Équipement de préhension (1) selon la revendication 11, dans lequel la référence (8) comprend un façonnage polygonal d'une cloison latérale (9) de l'équipement de préhension (1), le façonnage polygonal étant réalisé autour d'un orifice de fixation (3).

13. Équipement de préhension (1) selon l'une quelconque des revendications de 7 à 12, comprenant un corps (2) définissant un périmètre fermé, les orifices de fixation (3) étant positionnés le long du périmètre fermé.

14. Équipement de préhension (1) selon la revendication 13, comprenant un pont de support (5) passant à travers le périmètre fermé, le pont de support (5) étant pourvu d'une pluralité d'orifices de fixation (3) supplémentaires et comprenant une pluralité de secondes parties des moyens d'accouplement coniques.

15. Équipement de préhension (1) selon l'une quelconque des revendications de 7 à 14, comprenant un corps (2) définissant un périmètre ouvert, les orifices de fixation (3) étant positionnés le long du périmètre ouvert.
